# EUROPEAN PATENT APPLICATION

(11) **EP 4 648 315 A1**
(43) Date of publication of application: **12.11.2025**
(21) Application number: 23917145.7
(22) Date of filing: 06.11.2023
(51) Int. Cl.: H04J 14/02

(54) **POWER REGULATION METHOD AND OPTICAL COMMUNICATION SYSTEM**

(30) Priority: 17.01.2023 CN 202310084730
(71) Applicant: ZTE CORPORATION, Shenzhen, Guangdong 518057 (CN)
(72) Inventor: SHANG, Wendong, Shenzhen, Guangdong 518057 (CN); SHI, Hu, Shenzhen, Guangdong 518057 (CN); CHEN, Huan, Shenzhen, Guangdong 518057 (CN); FENG, Zhenhua, Shenzhen, Guangdong 518057 (CN)
(74) Representative: Ziebig Hengelhaupt Intellectual Property Attorneys Patentanwaltskanzlei PartGmbB
(86) International application number: PCT/CN2023/129886
(87) International publication number: WO 2024/152677

(57) **Abstract**

The present application relates to the technical field of communications, and discloses a power regulation method and an optical communication system. The power regulation method comprises: obtaining a power difference between first power of a first amplifier in a target transmission span and second power of a second amplifier in the target transmission span, wherein the first amplifier is used for transmitting a first waveband signal, the second amplifier is used for transmitting a second waveband signal, and the first power is smaller than the second power; when the power difference is greater than or equal to a threshold value, determining a first compensation amount of the first power and a second compensation amount of the second power on the basis of the power difference, the sum of the first compensation amount and the second compensation amount being smaller than the power difference; and increasing the first power of the first amplifier to first correction power according to the first compensation amount, and decreasing the second power of the second amplifier to second correction power according to the second compensation amount, so that a power difference between the first correction power and the second correction power is smaller than the threshold value.

## Description

### CROSS-REFERENCE TO RELATED APPLICATIONS

The present application claims priority to the Chinese patent application No. 202310084730.3 filed on January 17, 2023 to the China Patent Office, and entitled "POWER REGULATION METHOD AND OPTICAL COMMUNICATION SYSTEM", the entire content of which is incorporated herein by reference.

### TECHNICAL FIELD

The present application belongs to the technical field of communications, and particularly relates to a power regulation method and an optical communication system.

### BACKGROUND

Currently, with the rapid development of bandwidth intensive services, network traffic will continue to maintain high-speed growth. To meet high-capacity transmission requirements of an optical communication system, a wavelength division multiplexing (WDM) system can add extended bands such as a long-wavelength band (L-band) to a conventional band (C-band) to extend a communication frequency band of the optical communication system. In the wavelength division multiplexing system that includes the C-band and the L-band, the performance of the wavelength division multiplexing system deteriorates due to transfer of power from a C-band signal to an L-band signal caused by a stimulated Raman scattering (SRS) effect.

In order to solve the problem of performance degradation in the wavelength division multiplexing system, the power of the C-band signal is generally increased in the related art to compensate for the power transfer of the C-band signal caused by the SRS effect. However, increasing the power of the C-band signal in the related art will lead to an increase in a nonlinear damage cost of the C-band signal, and the poor compensation effect for C-band transfer power, which cannot thoroughly solve the problem of deterioration of the performance of the wavelength division multiplexing system.

### SUMMARY

Embodiments of the present application provide a power regulation method and an optical communication system, which can solve the problem of deterioration of the performance of a wavelength division multiplexing system.

In a first aspect, embodiments of the present application provide a power regulation method, applied to a wavelength division multiplexing optical communication system, including: obtaining a power difference between first power of a first amplifier in a target transmission span and second power of a second amplifier in the target transmission span, wherein the first amplifier is configured to transmit a first band signal, the second amplifier is configured to transmit a second band signal, and the first power is smaller than the second power; determining, in a case where the power difference is greater than or equal to a threshold value, a first compensation amount of the first power and a second compensation amount of the second power on the basis of the power difference, a sum of the first compensation amount and the second compensation amount being smaller than the power difference; and increasing the first power of the first amplifier to first correction power according to the first compensation amount, and decreasing the second power of the second amplifier to second correction power according to the second compensation amount, so that a power difference between the first correction power and the second correction power is smaller than the threshold value.

In a second aspect, embodiments of the present application provide an optical communication system, including: an obtaining module, configured to obtain a power difference between first power of a first amplifier in a target transmission span and second power of a second amplifier in the target transmission span, wherein the first amplifier is configured to transmit a first band signal, the second amplifier is configured to transmit a second band signal, and the first power is smaller than the second power; a determining module, configured to determine, in a case where the power difference is greater than or equal to a threshold value, a first compensation amount of the first power and a second compensation amount of the second power on the basis of the power difference, a sum of the first compensation amount and the second compensation amount being smaller than the power difference; and a regulating module, configured to increase the first power of the first amplifier to first correction power according to the first compensation amount, and decrease the second power of the second amplifier to second correction power according to the second compensation amount, so that a power difference between the first correction power and the second correction power is smaller than the threshold value.

In a third aspect, embodiments of the present application provide a computer storage medium, having a computer program stored thereon, wherein the computer program is used to execute the power regulation method described in the first aspect.

### BRIEF DESCRIPTION OF DRAWING(S)

FIG. 1 is a schematic diagram of a signal power change situation due to a fact that a signal is affected by an SRS effect after being subjected to fiber optic transmission in an original unregulated state.
FIG. 2 is a schematic diagram of a signal power change situation due to a fact that a signal is affected by an SRS effect after being subjected to fiber optic transmission after power regulation.
FIG. 3 is a schematic flowchart of a power regulation method provided by embodiments of the present application.
FIG. 4 is a schematic flowchart of another power regulation method provided by embodiments of the present application.
FIG. 5 is a schematic flowchart of another power regulation method provided by embodiments of the present application.
FIG. 6 is a schematic structural diagram of a wavelength division multiplexing optical communication system provided by embodiments of the present application.
FIG. 7 is a schematic flowchart of another power regulation method provided by embodiments of the present application.
FIG. 8 is a schematic structural diagram of an optical communication system provided by embodiments of the present application.

### DETAILED DESCRIPTION

The technical solutions in embodiments of the present application will be clearly described in the following with reference to accompanying drawings in the embodiments of the present application. Apparently, the described embodiments are some rather than all of the embodiments of the present application. All other embodiments obtained by those ordinarily skilled in the art based on the embodiments in the present application fall within the scope of protection of the present application.

Terms "first," "second" and the like in the specification and claims of the present application are used to distinguish similar objects, but are not used to describe a specific sequence or precedence order. It should be understood that data used in this way are exchangeable in a proper case, so that the embodiments of the present application may be implemented in an order other than those illustrated or described herein. Moreover, the objects distinguished by "first", "second" and the like are usually of the same class and do not limit the number of objects. For example, a first object may be one or more. In addition, "and/or" in the specification and the claims represents at least one of connected objects. A character "/" generally represents that association objects in front of and behind "/" are in an "or" relationship.

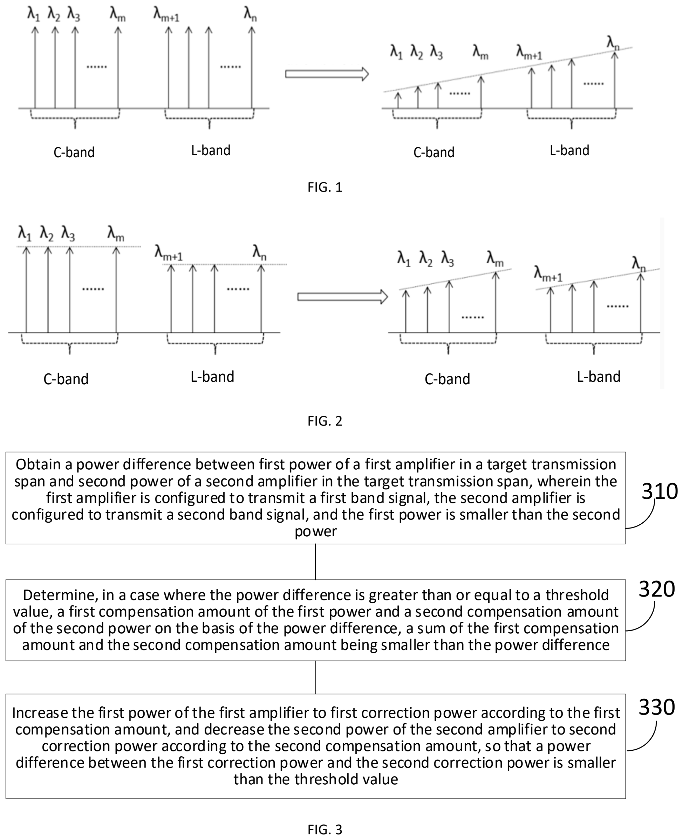

The applicant notes that in a wavelength division multiplexing system that includes a C-band and an L-band, as shown in FIG. 1, a part of power of a C-band signal is transferred to an L-band signal due to an SRS effect, resulting in a decrease in power of the C-band signal and an increase in power of the L-band signal. In this way, due to transfer of the part of power of the C-band signal, an equivalent loss of the C-band signal increases, resulting in a decrease in transmission performance of the C-band signal and a deterioration of the performance of the wavelength division multiplexing system. In addition, due to the fact that the L-band signal absorbs the part of the power transferred from the C-band signal, the nonlinear damage cost of the L-band signal increases, which also leads to the deterioration of the performance of the wavelength division multiplexing system.

In the related art, the power of the C-band signal is generally increased to compensate for the power transfer of the C-band signal caused by the SRS effect. However, increasing the power of the C-band signal in the related art will lead to an increase in the nonlinear damage cost of the C-band signal, and the poor compensation effect for the C-band transfer power, which cannot thoroughly solve the problem of the deterioration of the performance of the wavelength division multiplexing system.

Based on this, embodiments of the present application provide a power regulation method that decreases power of an L-band signal while increasing power of a C-band signal. As shown in FIG. 2, after the power of the C-band signal is increased while the power of the L-band signal is increased, in a case where an SRS effect causes transfer of a part of power of the C-band signal to the L-band signal, the part of power transferred from the C-band signal caused by the SRS effect may be compensated due to increase of the power of the C-band signal according to a first compensation amount, so that the optical signal-to-noise ratio of a first band signal is increased. At the same time, the part of power absorbed by the L-band due to the SRS effect may be offset due to decrease of the L-band signal according to a second compensation amount, thereby reducing the nonlinear damage cost of the L-band signal and optimizing the performance of the wavelength division multiplexing system.

Furthermore, comparing FIG. 1 with FIG. 2, it can be seen that in the power regulation method provided in the embodiment of the present application, since a sum of the first compensation amount and the second compensation amount is smaller than a power difference between the power of the C-band signal and the power of the L-band signal, an increase in nonlinear damage of the C-band signal caused by excessive increase of the power of the C-band signal may be avoided in the process of increasing the power of the C-band signal according to the regulation amount of the power of the C-band signal, and a decrease in the optical signal-to-noise ratio of the L-band signal caused by excessive decrease of the power of the L-band signal may be avoided in the process of decreasing the power of the L-band signal according to the second compensation amount, thereby optimizing the performance of the wavelength division multiplexing system and solving the problem of the deterioration of the performance of the wavelength division multiplexing system in the related art.

It should be pointed out that the power regulation method provided by the embodiment of the present application may be applied to a newly-built wavelength division multiplexing optical communication system, and may also be applied to a long-term operating wavelength division multiplexing optical communication system, which is not specifically limited in the present application herein.

A power regulation method provided by an embodiment of the present application is illustrated below in detail through specific embodiments and their application scenarios with reference to accompanying drawings.

As shown in FIG. 3, an embodiment of the present application provides a power regulation method, applied to a wavelength division multiplexing optical communication system. The power regulation method may include the following steps 310 to 330.

At step 310, a power difference between first power of a first amplifier in a target transmission span and second power of a second amplifier in the target transmission span is obtained, wherein the first amplifier is configured to transmit a first band signal, the second amplifier is configured to transmit a second band signal, and the first power is smaller than the second power.

At step 320, in a case where the power difference is greater than or equal to a threshold value, a first compensation amount of the first power and a second compensation amount of the second power are determined on the basis of the power difference, where a sum of the first compensation amount and the second compensation amount is smaller than the power difference.

At step 330, the first power of the first amplifier is increased to first correction power according to the first compensation amount, and the second power of the second amplifier is decreased to second correction power according to the second compensation amount, so that a power difference between the first correction power and the second correction power is smaller than the threshold value.

It can be understood that in the embodiment of the present application, the wavelength division multiplexing optical communication system may include at least one fiber optic transmission span, at least two first amplifiers dedicated to transmitting the first band signal, and at least two second amplifiers dedicated to transmitting the second band signal.

The wavelength division multiplexing optical communication system may be an optical communication system that uses the same fiber optic to simultaneously transmit a plurality of optical carriers with different wavelengths. The band of a first band is different from that of a second band. In some cases, the first band may be one of a C-band, an L-band, a short-wavelength band (S-band), or an ultralong wavelength band (U-band), and the second band may be another band, different from the first band, of the C-band, the L-band, the S-band, or the U-band. For example, the first band may be the C-band, and the second band may be the L-band.

The first amplifier and the second amplifier may be at least one of an optical booster amplifier (OBA), an optical preposition amplifier (OPA), an optical line amplifier (OLA), or an optical amplifier (OA).

The first amplifier and the second amplifier may be arranged on an ingress side of the fiber optic transmission span and/or an egress side of the fiber optic transmission span.

In step 310, the target transmission span may be any fiber optic transmission span in the wavelength division multiplexing optical communication system. The first amplifier and the second amplifier in the target transmission span may be arranged on an ingress side of the target transmission span and/or an egress side of the target transmission span. In practical applications, the obtained first power of the first amplifier may generally be smaller than the second power of the second amplifier. This is because in an ideal state of the wavelength division multiplexing optical communication system, the first power of the first amplifier may be equal to the second power of the second amplifier. However, the wavelength division multiplexing optical communication system is affected by an SRS effect, the first power of the first amplifier is transferred to the second power of the second amplifier, making the first power of the first amplifier decrease and the second power of the second amplifier increase, resulting in a phenomenon that the first power of the first amplifier is smaller than the second power of the second amplifier.

In step 320, in a case where the power difference between the first power of the first amplifier in the target transmission span and the second power of the second amplifier in the target transmission span is greater than or equal to the threshold value, it indicates that the wavelength division multiplexing optical communication system is severely affected by the SRS effect, resulting in the first power of the first amplifier transferring to the second power of the second amplifier, such that the power difference between the first power of the first amplifier and the second power of the second amplifier is large. In this case, according to the embodiment of the present application, the first compensation amount of the first power and the second compensation amount of the second power may be determined based on the power difference, wherein the sum of the first compensation amount and the second compensation amount is smaller than the power difference, avoiding overcompensation for the first power of the first amplifier and the second power of the second amplifier.

In step 330, according to the embodiment of the present application, the first power of the first amplifier configured to transmit the first band signal is increased according to the first compensation amount, so as to compensate for a part of transferred power of the first band signal, thereby increasing the optical signal-to-noise ratio of the first band signal. At the same time, the second power of the second amplifier configured to transmit the second band signal is decreased according to the second compensation amount, so as to offset a part of power absorbed by the second band, thereby reducing the nonlinear damage of the second band signal.

Moreover, because the sum of the first compensation amount and the second compensation amount is smaller than the power difference between the first power and the second power, an increase in nonlinear damage of the first band signal caused by excessive increasing of the first power can be avoided in the process of increasing the first power according to the first compensation amount, and a decrease in the optical signal-to-noise ratio of the second band signal caused by excessive decreasing of the second power can be avoided in the process of decreasing the second power according to the second compensation amount.

According to the power regulation method provided by the embodiment of the present application, the power difference between the first power of the first amplifier in the target transmission span and the second power of the second amplifier in the target transmission span is obtained, wherein the first amplifier is configured to transmit the first band signal, the second amplifier is configured to transmit the second band signal, and the first power is smaller than the second power; in a case where the power difference is greater than or equal to the threshold value, the first compensation amount of the first power and the second compensation amount of the second power are determined on the basis of the power difference, the sum of the first compensation amount and the second compensation amount is smaller than the power difference; and the first power of the first amplifier is increased to the first correction power according to the first compensation amount, and the second power of the second amplifier is decreased to the second correction power according to the second compensation amount, so that the power difference between the first correction power and the second correction power is smaller than the threshold value. In this way, in a scenario of performance deterioration of the wavelength division multiplexing optical communication system, on the one hand, the first power of the first amplifier configured to transmit the first band signal is increased according to the first compensation amount so as to compensate for the part of transferred power of the first band signal, thereby increasing the optical signal-to-noise ratio of the first band signal; and the second power of the second amplifier configured to transmit the second band signal is decreased according to the second compensation amount so as to offset the part of power absorbed by the second band, thereby reducing the nonlinear damage of the second band signal. On the other hand, because the sum of the first compensation amount and the second compensation amount is smaller than the power difference between the first power and the second power, the increase in the nonlinear damage of the first band signal caused by excessive increasing of the first power can be avoided in the process of increasing the first power according to the first compensation amount, and the decrease in the optical signal-to-noise ratio of the second band signal caused by excessive decreasing of the second power can be avoided in the process of decreasing the second power according to the second compensation amount. The performance of the wavelength division multiplexing system is optimized through the above two aspects, and the problem of deterioration of the performance of the wavelength division multiplexing system in the related art is solved.

In addition, in order to achieve a better power regulation effect, the embodiment of the present application may further perform multiple power regulations on the first amplifier and the second amplifier. For example, in step 330 of the present application, after increasing the first power of the first amplifier to the first correction power according to the first compensation amount, and decreasing the second power of the second amplifier to the second correction power according to the second compensation amount, the power difference between the first correction power and the second correction power may be smaller than the threshold value theoretically. However, in the practical applications, there may be a case where the power difference between the first correction power and the second correction power is greater than the threshold value, which indicates that the effect of this power regulation does not achieve the optimal effect. In this case, after step 330, the embodiment of the present application may further re-obtain the power difference between the first power of the first amplifier and the second power of the second amplifier, and re-determine a third compensation amount of the first power and a fourth compensation amount of the second power. If a sum of the third compensation amount and the fourth compensation amount is smaller than the re-obtained power difference between the first power and the second power, the first power of the first amplifier is increased again according to the third compensation amount, and the second power of the second amplifier is decreased again according to the fourth compensation amount.

In other words, the embodiment of the present application may regulate the first power of the first amplifier and the second power of the second amplifier for multiple times according to steps similar to steps 310-330 above, until the power difference between the regulated power of the first amplifier and the regulated power of the second amplifier is smaller than the threshold value. In this way, power regulation achieves better effect through multiple power regulations.

The above threshold value may be set according to actual working requirements of the wavelength division multiplexing system, which is not specifically limited in the present application. In a case where the threshold value is set smaller and the precision of the power regulation is finer, by performing more power regulations, the power difference between the regulated power of the first amplifier and the regulated power of the second amplifier may be made smaller than the threshold value. In a case where the threshold value is set larger and the precision of the power regulation is rougher; by performing fewer power regulations, the power difference between the regulated power of the first amplifier and the regulated power of the second amplifier may be made smaller than the threshold value within shorter time.

In an embodiment, in order to achieve better effect of single power regulation, in step 320, the first compensation amount may be smaller than half of the power difference, and the second compensation amount may be smaller than half of the power difference; and the first compensation amount is the same as the second compensation amount.

According to the embodiment of the present application, in the process of increasing the first power according to the first compensation amount, the regulated first correction power can be made close to a power value of the first amplifier in the ideal state of the wavelength division multiplexing optical communication system on the premise of avoiding the increase of the nonlinear damage of the first band signal caused by excessive increasing of the first power; and in the process of decreasing the second power according to the second compensation amount, the regulated second correction power can be made close to the power value of the second amplifier in the ideal state of the wavelength division multiplexing optical communication system on the premise of avoiding the decrease of the optical signal-to-noise ratio of the second band signal caused by excessive decreasing of the second power, thereby further optimizing the performance of the wavelength division multiplexing system.

For example, in the ideal state of the wavelength division multiplexing optical communication system, the first power P1 of the first amplifier and the second power P2 of the second amplifier may be the same. In a case where the wavelength division multiplexing optical communication system is affected by the SRS effect, it may cause part of the power (such as 0.5ΔP) in the first power P1 of the first amplifier to transfer to the second power P2 of the second amplifier, resulting in a decrease in the first power of the first amplifier to (P1-0.5ΔP) and an increase in the second power of the second amplifier to (P2+0.5ΔP), such that the power difference ΔP between the first power of the first amplifier and the second power of the second amplifier is greater than the threshold value. In this case, the first compensation amount of the first power and the second compensation amount of the second power are determined based on the power difference ΔP between the first power of the first amplifier and the second power of the second amplifier, wherein the first compensation amount may be less than 0.5ΔP, the second compensation amount may be less than 0.5ΔP, and the first compensation amount and the second compensation amount may be the same. In this way, in the process of increasing the first power (P1-0.5ΔP) according to the first compensation amount less than 0.5ΔP, increase of the nonlinear damage of the first band signal caused by excessive increasing of the first power can be avoided, and the regulated first correction power can further be made close to a power value P1 of the first amplifier in the ideal state of the wavelength division multiplexing optical communication system. Meanwhile, in the process of decreasing the second power (P2+0.5ΔP) according to the second compensation amount less than 0.5ΔP, the decrease of the optical signal-to-noise ratio of the second band signal caused by excessive decreasing of the second power can be avoided, and the regulated second correction power can further be made close to a power value P2 of the second amplifier in the ideal state of the wavelength division multiplexing optical communication system, thereby further optimizing the performance of the wavelength division multiplexing system.

In practical applications, taking an example that the wavelength division multiplexing optical communication system includes the first amplifier dedicated to transmitting a C-band signal and the second amplifier dedicated to transmitting an L-band signal, as shown in FIG. 1, in a case where the first power of the first amplifier is transferred to the second power of the second amplifier due to the fact that the wavelength division multiplexing optical communication system is affected by the SRS effect, power transfer situations of different carrier signals in the C-band are not the same. The closer the wavelength in the C-band is to the carrier signal in the L-band, the less the power is transferred. Meanwhile, power absorption situations of different carrier signals in the L-band are also not the same. The closer the wavelength in the L-band is to the carrier signal in the C-band, the less the power is absorbed.

Based on this, in order to achieve good compensation effects for the power of carrier signals with different wavelengths in the first band, in step 320, the first compensation amount may be one-quarter of the power difference, and in order to achieve good compensation effects for the power of carrier signals with different wavelengths in the second band, in step 320, the second compensation amount may be one-quarter of the power difference.

For example, in the case where the first compensation amount is one-quarter of the power difference and the second compensation amount is one-quarter of the power difference, as shown in FIG. 2, half of the power difference is offset by the first compensation amount 0.25ΔP and the second compensation amount 0.25ΔP. In the process of increasing the first power according to the first compensation amount 0.25ΔP, the good compensation effects are achieved for the carrier signals with the different wavelengths in the first band. At the same time, in the process of decreasing the second power according to the second compensation amount 0.25ΔP, the good compensation effects are achieved for the carrier signals with the different wavelengths in the second band.

The first compensation amount may be different from the second compensation amount, and the first compensation amount and the second compensation amount may also be other values. For example, the first compensation amount is 0.4ΔP, 0.3ΔP, or 0.2ΔP, and the second compensation amount is 0.55ΔP, 0.45ΔP, or 0.4ΔP, etc., which is not specifically limited in the present application.

In addition, in the practical applications, the wavelength division multiplexing optical communication system may include one or more fiber optic transmission spans. With variation of the number of the fiber optic transmission spans in the wavelength division multiplexing system, and a manner of determining the power difference between the first power of the first amplifier and the second power of the second amplifier in the fiber optic transmission spans is different. The examples are respectively given below for description.

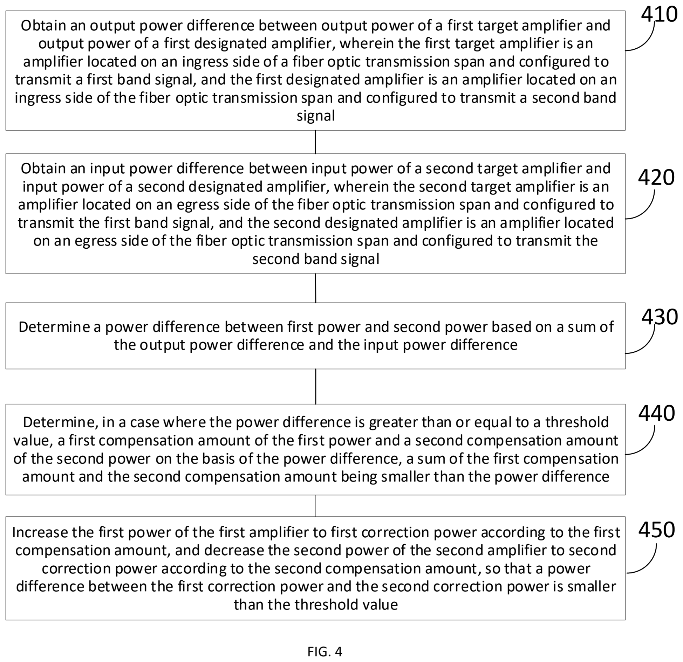

In an embodiment, in a scenario where the wavelength division multiplexing optical communication system may include one fiber optic transmission span, two first amplifiers, and two second amplifiers, as shown in FIG. 4, an embodiment of the present application provides a power regulation method, applied to a wavelength division multiplexing optical communication system including one fiber optic transmission span. The power regulation method may include the following steps 410 to 450.

At step 410, an output power difference between output power of a first target amplifier and output power of a first designated amplifier is obtained, wherein the first target amplifier is an amplifier located on an ingress side of the fiber optic transmission span and configured to transmit a first band signal, and the first designated amplifier is an amplifier located on an ingress side of the fiber optic transmission span and configured to transmit a second band signal.

At step 420, an input power difference between input power of a second target amplifier and input power of a second designated amplifier is obtained, wherein the second target amplifier is an amplifier located on an egress side of the fiber optic transmission span and configured to transmit the first band signal, and the second designated amplifier is an amplifier located on an egress side of the fiber optic transmission span and configured to transmit the second band signal.

At step 430, a power difference between the first power and the second power is determined based on a sum of the output power difference and the input power difference.

At step 440, In the case where the power difference is greater than or equal to a threshold value, a first compensation amount of the first power and a second compensation amount of the second power are determined on the basis of the power difference, where a sum of the first compensation amount and the second compensation amount is smaller than the power difference.

At step 450, the first power of the first amplifier is increased to first correction power according to the first compensation amount, and the second power of the second amplifier is decreased to second correction power according to the second compensation amount, so that a power difference between the first correction power and the second correction power is smaller than the threshold value.

Steps 410 to 430 may be substeps of step 310. Step 440 may refer to the specific content of step 320. Step 450 may refer to the specific content of step 330, which will not be repeated here.

It may be understood that in the embodiment of the present application, the first amplifier is configured to transmit the first band signal, and the second amplifier is configured to transmit the second band signal. The target transmission span comprises one fiber optic transmission span, the first amplifier includes the first target amplifier and the second target amplifier, the first target amplifier is located on the ingress side of the fiber optic transmission span, and the second target amplifier is located on the egress side of the fiber optic transmission span. The second amplifier includes the first designated amplifier and the second designated amplifier, the first designated amplifier is located on the ingress side of the fiber optic transmission span, and the second designated amplifier is located on the egress side of the fiber optic transmission span.

In step 410, the first target amplifier is the amplifier located on the ingress side of the fiber optic transmission span and configured to transmit the first band signal, and the first designated amplifier is the amplifier located on the ingress side of the fiber optic transmission span and configured to transmit the second band signal. In the embodiment of the present application, the output power of the first target amplifier and the output power of the first designated amplifier may be obtained first, and then the output power difference between the output power of the first target amplifier and the output power of the first designated amplifier is calculated. In other words, the output power difference between the first amplifier and the second amplifier on the ingress side of the fiber optic transmission span is calculated in the embodiment of the present application.

In step 420, the second target amplifier is the amplifier located on the egress side of the fiber optic transmission span and configured to transmit the first band signal, and the second designated amplifier is the amplifier located on the egress side of the fiber optic transmission span and configured to transmit the second band signal. In the embodiment of the present application, the input power of the second target amplifier and the input power of the second designated amplifier may be obtained first, and then the input power difference between the input power of the second target amplifier and the input power of the second designated amplifier is calculated. In other words, the input power difference between the first amplifier and the second amplifier on the egress side of the fiber optic transmission span is calculated in the embodiment of the present application.

In step 430, in the embodiment of the present application, a sum of the output power difference obtained in step 410 and the input power difference obtained in step 420 may be calculated first, and then the sum of the output power difference and the input power difference is determined as the power difference between the first power and the second power.

In this way, in the scenario where the wavelength division multiplexing optical communication system includes one fiber optic transmission span, the power difference between the first power and the second power may be accurately calculated by calculating the sum of the output power difference between the first amplifier and the second amplifier on the ingress side of the fiber optic transmission span as well as the input power difference between the first amplifier and the second amplifier on the egress side of the fiber optic transmission span. This facilitates subsequent determination of the first compensation amount of the first power and the second compensation amount of the second power on the basis of the power difference between the first power and the second power, so as to make compensatory regulation on the first power of the first amplifier and the second power of the second amplifier.

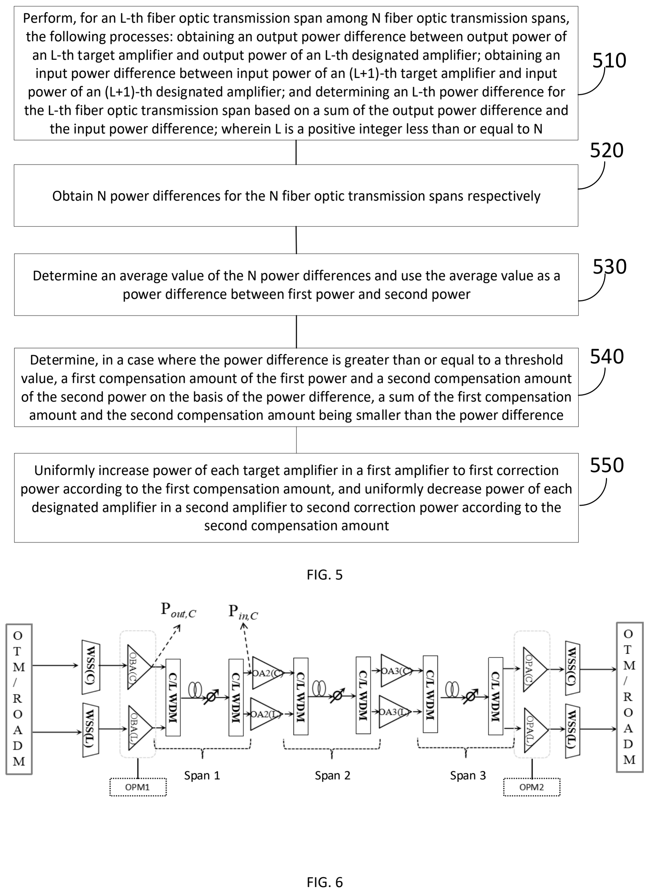

In another embodiment, in a scenario where the wavelength division multiplexing optical communication system may include N fiber optic transmission spans, a first amplifier, and a second amplifier, as shown in FIG. 5, an embodiment of the present application provides a power regulation method, applied to the wavelength division multiplexing optical communication system including the N fiber optic transmission spans. The power regulation method may include the following steps 510 to 550.

At step 510, for an L-th fiber optic transmission span among the N fiber optic transmission spans, the following processes are performed: obtaining an output power difference between output power of an L-th target amplifier and output power of an L-th designated amplifier; obtaining an input power difference between input power of an (L+1)-th target amplifier and input power of an (L+1)-th designated amplifier; and determining an L-th power difference for the L-th fiber optic transmission span based on a sum of the output power difference and the input power difference; where L is a positive integer less than or equal to N.

At step 520, N power differences for the N fiber optic transmission spans are obtained respectively.

At step 530, an average value of the N power differences is determined, and the average value is used as a power difference between first power and second power.

At step 540, in a case where the power difference is greater than or equal to a threshold value, a first compensation amount of the first power and a second compensation amount of the second power are determined on the basis of the power difference, a sum of the first compensation amount and the second compensation amount being smaller than the power difference.

At step 550, power of each target amplifier in the first amplifier is increased to first correction power according to the first compensation amount, and power of each designated amplifier in the second amplifier is decreased to second correction power according to the second compensation amount.

Steps 510 to 530 may be substeps of step 310. Step 540 may refer to the specific content of step 320. Step 550 may refer to the specific content of step 330, which will not be repeated here.

In step 510, the target transmission span includes N fiber optic transmission spans, and N is a positive integer greater than or equal to 2.

In step 510, the first amplifier includes a first target amplifier,..., an i-th target amplifier,..., and an (N+1)-th target amplifier, where i is a positive integer greater than 1 and less than N+1; and the first target amplifier is located on an ingress side of a first fiber optic transmission span, the i-th target amplifier is located on an egress side of an (i-1)-th fiber optic transmission span, and the (N+1)-th target amplifier is located on an egress side of an N-th fiber optic transmission span.

In step 510, the second amplifier includes a first designated amplifier,..., an i-th designated amplifier,..., and an (N+1)-th designated amplifier; and the first designated amplifier is located on the ingress side of the first fiber optic transmission span, the i-th designated amplifier is located on the egress side of the (i-1)-th fiber optic transmission span, and the (N+1)-th designated amplifier is located on the egress side of the N-th fiber optic transmission span.

In step 510 to step 530, in the embodiment of the present application, the power difference in the fiber optic transmission span may be obtained for each of the N fiber optic transmission spans, so that N power differences for the N fiber optic transmission spans are obtained respectively, and then the average value of the N power differences is used as the power difference between the first power and the second power.

For a single fiber optic transmission span, for example, for the L-th fiber optic transmission span among the N fiber optic transmission spans, the L-th target amplifier is an amplifier located on the ingress side of the L-th fiber optic transmission span and configured to transmit the first band signal, and the L-th designated amplifier is an amplifier located on the ingress side of the L-th fiber optic transmission span and configured to transmit the second band signal. In the embodiment of the present application, output power of the L-th target amplifier and output power of the L-th designated amplifier may be obtained first, and then an output power difference between the output power of the L-th target amplifier and the output power of the L-th designated amplifier is calculated. In addition, the (L+1)-th target amplifier is an amplifier located on the egress side of the L-th fiber optic transmission span and configured to transmit the first band signal, and the (L+1)-th designated amplifier is an amplifier located on the egress side of the L-th fiber optic transmission span and configured to transmit the second band signal. In the embodiment of the present application, input power of the (L+1)-th target amplifier and input power of the (L+1)-th designated amplifier may be obtained first, and then an input power difference between the input power of the (L+1)-th target amplifier and the input power of the (L+1)-th designated amplifier is calculated. A sum of the output power difference and the input power difference is then determined as the L-th power difference for the L-th fiber optic transmission span.

In this way, in a scenario where the wavelength division multiplexing optical communication system includes the plurality of fiber optic transmission spans, the power difference between the first power and the second power may be accurately calculated in a manner of calculating the average value of the power differences for the plurality of fiber optic transmission spans. This facilitates the subsequent determination of the first compensation amount of the first power and the second compensation amount of the second power on the basis of the power difference between the first power and the second power, so as to make compensatory regulation on the first power of the first amplifier and the second power of the second amplifier.

Moreover, because in the embodiment of the present application, the power of each target amplifier in the first amplifier is increased to the first correction power according to the first compensation amount, and the power of each designated amplifier in the second amplifier is decreased to the second correction power according to the second compensation amount, which can ensure that compensatory regulation is performed on the power of the first amplifier and the second amplifier on the ingress side/egress side of each fiber optic transmission span, thereby optimizing the performance of each fiber optic transmission span in the wavelength division multiplexing system.

In addition, in the practical applications, the power difference for one fiber optic transmission span is not only related to the output power difference between the first amplifier and the second amplifier on the ingress side of the fiber optic transmission span, and the input power difference between the first amplifier and the second amplifier on the egress side of the fiber optic transmission span, but also related to the number of the first band signals and the number of the second band signals transmitted in the fiber optic transmission span. If the number of the first band signals is different from the number of the second band signals, it will also affect the calculation of the power difference of the fiber optic transmission span. Illustration is given below with an example.

For example, in the L-th fiber optic transmission span, in a case where the number of the first band signals is the same as the number of the second band signals, in above step 510, determining the L-th power difference for the L-th fiber optic transmission span based on the sum of the output power difference and the input power difference may include: using the sum of the output power difference and the input power difference as the L-th power difference for the L-th fiber optic transmission span.

In this way, in the L-th fiber optic transmission span, in the case where the number of the first band signals is the same as the number of the second band signals, there is no need to consider the power difference caused by the difference in the number of the first band signals and the number of the second band signals in the fiber optic transmission span, and the sum of the output power difference and the input power difference may be directly used as the L-th power difference for the L-th fiber optic transmission span.

For another example, in the L-th fiber optic transmission span, in a case where the number of the first band signals is different from the number of the second band signals, in above step 510, determining the L-th power difference for the L-th fiber optic transmission span based on the sum of the output power difference and the input power difference may include: determining, in a case where the number of the first band signals is different from the number of the second band signals in the L-th fiber optic transmission span, a target difference based on the number of the first band signals in the L-th fiber optic transmission span and the number of the second band signals in the L-th fiber optic transmission span; and using the sum of the output power difference, the input power difference and the target difference as the L-th power difference for the L-th fiber optic transmission span.

The target difference is the power difference caused by the difference between the number of the first band signals and the number of the second band signals. The target difference may be - 2*10*log10(N1/N2), where N1 is the number of the first band signals, and N2 is the number of the second band signals. Then, in the embodiment of the present application, the sum of the output power difference, the input power difference and the target difference may be used as the L-th power difference for the L-th fiber optic transmission span. In this way, in the L-th fiber optic transmission span, in the case where the number of the first band signals is different from the number of the second band signals, the power difference caused by the difference in the numbers of signal waves may also be eliminated in the embodiment of the present application.

Similarly, it can be seen that in step 430, determining the power difference between the first power and the second power based on the sum of the output power difference and the input power difference may include: determining, in a case where the number of the first band signals is the same as the number of the second band signals in the fiber optic transmission span, the sum of the output power difference and the input power difference as the power difference between the first power and the second power; determining, in a case where the number of the first band signals is different from the number of the second band signals in the fiber optic transmission span, the target difference based on the number of the first band signals in the fiber optic transmission span and the number of the second band signals in the fiber optic transmission span; and determining the sum of the output power difference, the input power difference and the target difference as the power difference between the first power and the second power. In this way, in the case where the number of the first band signals is different from the number of the second band signals in the fiber optic transmission span, the power difference caused by the different numbers of signal waves may also be eliminated in the embodiment of the present application.

In addition, the power regulation method provided by the embodiment of the present application may be applied to a newly-built wavelength division multiplexing optical communication system, and may also be applied to a long-term operating wavelength division multiplexing optical communication system. For the newly-built wavelength division multiplexing optical communication system, in the embodiment of the present application, the power of the first amplifier may be regulated to first expected power in advance and the power of the second amplifier is regulated to second expected power, wherein the first expected power may be a power value of the first amplifier in the ideal state of the wavelength division multiplexing optical communication system, and the second expected power may be a power value of the second amplifier in the ideal state of the wavelength division multiplexing optical communication system. Specific values of the first expected power and the second expected power may be set according to the actual working requirements of the wavelength division multiplexing optical communication system, which is not specifically limited in the present application.

For example, in a case where the power regulation method provided by the embodiment of the present application is applied to the newly-built wavelength division multiplexing optical communication system, prior to the step 310 of obtaining the power difference between the first power of the first amplifier in the target transmission span and the second power of the second amplifier in the target transmission span, the power regulation method provided by the embodiment of the present application further includes: determining the first expected power of the first amplifier; determining the second expected power of the second amplifier; and regulating the power of the first amplifier to the first expected power and regulating the power of the second amplifier to the second expected power.

In this way, in a case where the newly-built wavelength division multiplexing optical communication system is in initial operation, the power of the first amplifier is regulated to the first expected power, and the power of the second amplifier is regulated to the second expected power, which is beneficial for the first amplifier and the second amplifier in the wavelength division multiplexing optical communication system to start operating according to actual working requirements.

The following provides a specific explanation of a power regulation method provided by embodiments of the present application by taking an example that the wavelength division multiplexing optical communication system includes three fiber optic transmission spans.

The wavelength division multiplexing optical communication system shown in FIG. 6 includes three fiber optic transmission spans (span 1, span 2, and span 3), four first amplifiers for transmitting C-band signals, and four second amplifiers for transmitting L-band signals. The first amplifier includes an OBA(C), an OA2(C), an OA3(C), and an OPA(C). The second amplifier includes an OBA(L), an OA2(L), an OA3(L) and an OPA(L).

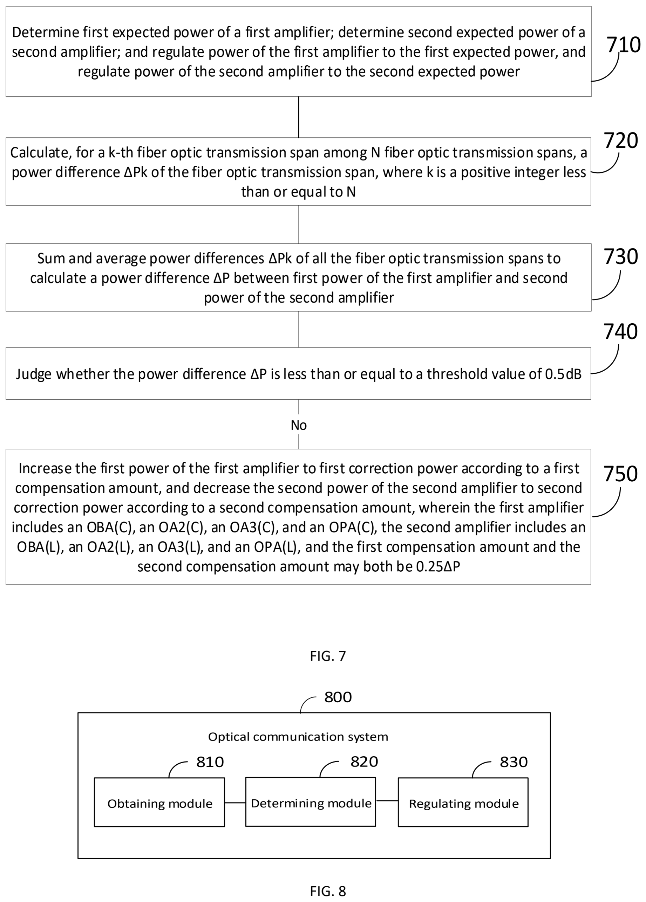

In a scenario where the wavelength division multiplexing optical communication system includes three fiber optic transmission spans as shown in FIG. 6, and where the wavelength division multiplexing optical communication system is a newly-built system, as shown in FIG. 7, an embodiment of the present application provides a power regulation method, which may include the following steps 710 to 750.

At step 710, first expected power of the first amplifiers is determined; second expected power of the second amplifiers is determined; and power of each first amplifier is regulated to the first expected power, and power of each second amplifier is regulated to the second expected power.

As shown in FIG.6, the first amplifiers configured to transmit the C-band signal include an OBA(C), an OA2(C), an OA3(C), and an OPA(C). The second amplifiers configured to transmit the L-band signal include an OBA(L), an OA2(L), an OA3(L) and an OPA(L).

The first expected power P_{out,C} of the first amplifiers is equal to 10*log10[P_{λ,C}(mW)*N_{c}. P_{λ,C} (dBm) is single wave power of a carrier signal, of which the wavelength is λ, in the C-band, and N_{c} is the number of the C-band signals. The output power of each of the OBA(C), thOA2(C), the OA3(C), and the OPA(C) may be uniformly regulated to the first expected power P_{out,C} in the embodiment of the present application.

The second expected power P_{out,L} of the second amplifier is equal to 10*log10[P_{λ,L}(mW)*N_{L}]. P_{λ,L} (dBm) is single wave power of a carrier signal, of which the wavelength is λ, in the L-band, and N_{L} is the number of the L-band signals. The output power of each of the OBA(L), the OA2(L), the OA3(L) and the OPA(L) may be uniformly regulated to the second expected power P_{out,L} in the embodiment of the present application.

At step 720: for a k-th fiber optic transmission span among the N fiber optic transmission spans, the power difference ΔPk of the fiber optic transmission span is calculated, where k is a positive integer less than or equal to N.

For the k-th fiber optic transmission span among the N fiber optic transmission spans, the k-th power difference for the k-th fiber optic transmission span is calculated. For the system with N spans, ΔPk (k=1,..., N) is calculated for each span respectively. Taking calculation of the power difference ΔP1 of the first fiber optic transmission span as an example, a calculation method for ΔP1 is as follows: the power difference ΔP1 of the first fiber optic transmission span is ΔP1=Δ1+Δ2.

Wherein, Δ1=P_{out,c}-P_{out,L}-10*log10(N_{c}/N_{L}), P_{out,C} is the output power of the OBA(C), and P_{out,L} is the output power of the OBA(L). When the number of the C-band signals is the same as the number of the L-band signals, i.e. N_{c}=N_{L}, then 10*log10(N_{c}/N_{L}) is 0, Δ1 may be understood as the difference between the output power of the C-band OBA and the output power of the L-band OBA on the ingress side of the first fiber optic span. When the number of the C-band signals is not the same as the number of the L-band signals, i.e. N_{c}≠N_{L}, Δ1 may be understood as the difference between the output power of the C-band OBA and the output power of the L-band OBA on the ingress side of the first fiber optic span, and meanwhile, it is necessary to eliminate the power difference log10(N_{c}/N_{L}) caused by the number of the signal waves.

Wherein, Δ2=P_{in,C}-P_{in,L}-10*log10(N_{c}/N_{L}), P_{in,C} is the input power of the OA2(C), and P_{in,L} is the input power of the OA2(L). When the number of the C-band signals is the same as the number of the L-band signals, i.e. N_{c}=N_{L}, Δ2 may be understood as the difference between the input power of the C-band OA2 and the input power of the L-band OA2 on the egress side of the first fiber optic span. When N_{c}≠N_{L}, Δ2 may be understood as the difference between the input power of the C-band OA and the input power of the L-band OA on the downstream of the first fiber optic span, and meanwhile, it is necessary to eliminate the power difference 10*log10(N_{c}/N_{L}) caused by the number of the signal waves.

At step 730: the power differences ΔPk of all the fiber optic transmission spans are summed and averaged to calculate the power difference ΔP between the first power of the first amplifier and the second power of the second amplifier.

Wherein, ΔP=(1/N)*∑(ΔPk), and ΔPk of all the fiber optic transmission spans is summed and averaged to obtain ΔP.

At step 740: whether the power difference ΔP is less than or equal to the threshold value of 0.5dB is judged.

In step 740, if the power difference ΔP is greater than 0.5dB, step 750 is performed. If the power difference ΔP is less than or equal to 0.5dB, the power regulation ends.

At step 750: the first power of each first amplifier is increased to the first correction power according to the first compensation amount, and the second power of each second amplifier is decreased to the second correction power according to the second compensation amount. The first amplifiers include the OBA(C), the OA2(C), the OA3(C), and the OPA(C), and the second amplifiers include the OBA(L), the OA2(L), the OA3(L), and the OPA(L). The first compensation amount and the second compensation amount may both be 0.25ΔP.

In the embodiment of the present application, the output power of the OBA, the OA2, the OA3, and the OPA may be regulated, wherein the output power of the OBA(C), the OA2(C), the OA3(C), and the OPA(C) is increased by 0.25ΔP from the initial first expected power, and the output power of the OBA(L), the OA2(L), the OA3(L), and the OPA(L) is decreased by 0.25ΔP from the initial second expected power.

It can be understood that since ΔP is the difference between the upstream and downstream C-band power and L-band power of the fiber optic, in order to achieve the goal of 50% compensation for the C-band power and 50% compensation for the L-band power, the power regulating amount of the C-band is half of ΔP/2. That is, the output power of the OBA(C), the OA2(C), the OA3(C) and the OPA(C) is increased by 0.25ΔP. The power regulating amount of the L-band is half of ΔP/2. That is, the output power of the OBA(L), the OA2(L), the OA3(L) and the OPA(L) is decreased by 0.25ΔP.

After regulating the power in step 750, the power difference ΔP is recalculated, and whether ΔP is less than or equal to the threshold value of 0.5dB is judged. If ΔP is less than or equal to 0.5dB, the power regulation ends. If ΔP is greater than 0.5dB, steps 720-750 may be repeatedly performed to regulate the first power of the first amplifier and the second power of the second amplifier multiple times until ΔP is less than 0.5dB, and the power regulation ends.

In the newly-built wavelength division multiplexing optical communication system, due to the influence of the SRS effect, the power of the C-band signal is transferred to the L-band, resulting in an increase in an equivalent loss and a reduction in transmission performance. The L-band receives the power transferred from the C-band signal, resulting in a decrease in the equivalent loss and an improvement in the transmission performance. In order to maintain consistency in the performance of the C-band signal and the L-band signal, the power regulation method provided by the embodiment of the present application can increase the power of the C-band signal, decrease the power of the L-band signal, compensate for the power transfer amount of the C-band signal, and offset the increase amount in power of the L-band signal.

In some cases, in the power regulation method provided by embodiment of the present application, the total power difference between the power of the C-band signal and the power of the L-band signal on the ingress side of the fiber optic transmission span, and the total power difference between the C-band signal and the L-band signal on the egress side of the fiber optic transmission span are calculated respectively by using the fiber optic transmission span as a unit, so as to obtain the power difference ΔP of the fiber optic transmission span. Thus, the output power ΔP/4 of the C-band amplifier is increased, 50% of the power transferred by the C-band signal is compensated, the output power ΔP/4 of the L-band amplifier is decreased, and 50% of the power absorbed by the L-band is offset.

The signal power changes after power regulation are as shown in FIG. 2. Because the sum of the first compensation amount and the second compensation amount is smaller than the power difference between the power of the C-band signal and the power of the L-band signal, the increase in nonlinear damage of the C-band signal caused by excessive increasing of the power of the C-band signal power may be avoided in the process of increasing the power of the C-band signal according to the regulation amount of the power of the C-band signal, and the decrease in the optical signal-to-noise ratio of the L-band signal caused by excessive decreasing of the power of the L-band signal may be avoided in the process of decreasing the power of the L-band signal according to the second compensation amount. Therefore, the performance of the wavelength division multiplexing system is optimized, and the problem of deterioration of the performance of the wavelength division multiplexing system in the related art is solved.

In addition, the power regulation method provided by the embodiment of the present application may further be applied to the long-term operating wavelength division multiplexing optical communication system. In a scenario where the wavelength division multiplexing optical communication system may include three fiber optic transmission spans as shown in FIG. 6, and in a scenario where the wavelength division multiplexing optical communication system is the long-term operating system, the embodiment of the present application provides the power regulation method, which may include steps 720-750, and will not be repeated here.

It can be understood that in the long-term operation of the wavelength division multiplexing optical communication system, due to fiber optic aging, fusion splicing, etc., the SRS effect will be reduced. At this time, the signal power transfer amount in the C-band will decrease, and the signal power absorption amount in the L-band will also decrease. At this time, the power of the C-band signal is maintained near the power in a newly-built network state, i.e., the power is relatively high (the signal power transfer amount and compensation amount in the C-band are maximum when the network is newly built). Similarly, the power of the L-band signal is maintained near the power in the newly built network state, i.e., the power is relatively low (the signal power absorption amount and the power reduction amount in the L-band are the maximum when the network is newly built). Therefore, in the long-term operation of the system, in order to maintain the performance of the C-band signal and the L-band signal, the embodiment of the present application uses this power regulation method to recalculate ΔP/4, reduce the power of the C-band signal, and increase the power of the L-band signal, which further optimizes the performance of the wavelength division multiplexing system.

In addition, based on the same concept as the power regulation method provided by the embodiment of the present application, embodiments of the present application further provide a wavelength division multiplexing optical communication system.

As shown in FIG. 8, an embodiment of the present application provides an optical communication system, which may include: an obtaining module 810, configured to obtain a power difference between first power of a first amplifier in a target transmission span and second power of a second amplifier in the target transmission span, wherein the first amplifier is configured to transmit a first band signal, the second amplifier is configured to transmit a second band signal, and the first power is smaller than the second power; a determining module 820, configured to determine, in a case where the power difference is greater than or equal to a threshold value, a first compensation amount of the first power and a second compensation amount of the second power on the basis of the power difference, a sum of the first compensation amount and the second compensation amount being smaller than the power difference; and a regulating module 830, configured to increase the first power of the first amplifier to first correction power according to the first compensation amount, and decrease the second power of the second amplifier to second correction power according to the second compensation amount, so that a power difference between the first correction power and the second correction power is smaller than the threshold value.

The optical communication system provided according to the embodiment of the present application includes the obtaining module, configured to obtain the power difference between the first power of the first amplifier in the target transmission span and the second power of the second amplifier in the target transmission span, wherein the first amplifier is configured to transmit the first band signal, the second amplifier is configured to transmit the second band signal, and the first power is smaller than the second power; the determining module, configured to determine, in a case where the power difference is greater than or equal to the threshold value, the first compensation amount of the first power and the second compensation amount of the second power on the basis of the power difference, the sum of the first compensation amount and the second compensation amount being smaller than the power difference; and the regulating module, configured to increase the first power of the first amplifier to the first correction power according to the first compensation amount, and decrease the second power of the second amplifier to the second correction power according to the second compensation amount, so that the power difference between the first correction power and the second correction power is smaller than the threshold value. In this way, in a scenario of deterioration of the performance of the optical communication system, on the one hand, the first power of the first amplifier configured to transmit the first band signal is increased according to the first compensation amount so as to compensate for part of transferred power of the first band signal, thereby increasing the optical signal-to-noise ratio of the first band signal; and the second power of the second amplifier configured to transmit the second band signal is decreased according to the second compensation amount so as to offset part of power absorbed by the second band, thereby reducing the nonlinear damage of the second band signal. On the other hand, because the sum of the first compensation amount and the second compensation amount is smaller than the power difference between the first power and the second power, the increase in the nonlinear damage of the first band signal caused by excessive increasing of the first power can be avoided in the process of increasing the first power according to the first compensation amount, and the decrease in the optical signal-to-noise ratio of the second band signal caused by excessive decreasing of the second power can be avoided in the process of decreasing the second power according to the second compensation amount. The performance of the wavelength division multiplexing system is optimized through the above two aspects, and the problem of deterioration of the performance of the wavelength division multiplexing system in the related art is solved.

In addition, the optical communication system provided by the embodiment of the present application can further implement the steps of the power regulation method provided by any of the above method embodiments, which is not repeated here in the present application.

An embodiment of the present application further provides a computer storage medium, having a computer program stored thereon. The computer program is used to implement various processes of the above embodiment of the power regulation method and can achieve the same technical effects, which is not repeated here to avoid repetitions.

It should be noted that terms "including," "containing", or any other variations herein are intended to cover non-exclusive inclusion, such that a process, method, item or apparatus that includes a series of elements not only includes those elements, but also other elements that are not explicitly listed, or further include elements inherent in such the process, method, item or apparatus. Without more limitations, elements defined by a statement "including one" do not exclude the existence of other identical elements in the process, method, item or apparatus that includes the said elements. In addition, it is to be pointed out that the scope of the methods and apparatuses in the implementations of the present application is not limited to performing functions in an order shown or discussed, but may further include performing functions in a substantially simultaneous mode or in an opposite order according to the involved functions. For example, the described methods may be executed in a different order from the described ones, and various steps may also be added, omitted, or combined. In addition, features described with reference to certain examples may be combined in other examples.

According to the descriptions in the foregoing implementations, those skilled in the art may clearly learn that the methods according to the above embodiments may be implemented in a manner of software and a commodity hardware platform or certainly by using hardware. However, in many cases, the former is the better implementation. Based on such an understanding, the technical solutions of the present application essentially, or the part contributing to the prior art, may be presented in the form of a computer software product. The computer software product is stored in a storage medium (such as an ROM/RAM, a magnetic disk, or an optical disc), including several instructions to enable a terminal (which may be a mobile phone, a computer, a server, a network device, or the like) to execute the methods described in all the embodiments of the present application.

The embodiments of the present application have been described above with reference to the accompanying drawings. However, the present application is not limited to the above specific implementations, and the above specific implementations are merely exemplary and not limitative. Those of ordinary skill in the art may make various variations under the teaching of the present application without departing from the purpose of the present application and the scope of protection of the claims, and such variations shall all fall within the protection of the present application.

## Claims

1. A power regulation method, applied to a wavelength division multiplexing optical communication system, comprising:
obtaining a power difference between first power of a first amplifier in a target transmission span and second power of a second amplifier in the target transmission span, wherein the first amplifier is configured to transmit a first band signal, the second amplifier is configured to transmit a second band signal, and the first power is smaller than the second power;
determining, in a case where the power difference is greater than or equal to a threshold value, a first compensation amount of the first power and a second compensation amount of the second power on the basis of the power difference, a sum of the first compensation amount and the second compensation amount being smaller than the power difference; and
increasing the first power of the first amplifier to first correction power according to the first compensation amount, and decreasing the second power of the second amplifier to second correction power according to the second compensation amount, so that a power difference between the first correction power and the second correction power is smaller than the threshold value.

2. The power regulation method according to claim 1, wherein the first compensation amount is smaller than half of the power difference, and the second compensation amount is smaller than half of the power difference; and the first compensation amount is the same as the second compensation amount.

3. The power regulation method according to claim 1 or 2, wherein the first compensation amount is one-quarter of the power difference, and the second compensation amount is one-quarter of the power difference.

4. The power regulation method according to claim 1, wherein the target transmission span comprises one fiber optic transmission span, the first amplifier comprises a first target amplifier and a second target amplifier, the first target amplifier is located on an ingress side of the fiber optic transmission span, and the second target amplifier is located on an egress side of the fiber optic transmission span; the second amplifier comprises a first designated amplifier and a second designated amplifier, the first designated amplifier is located on the ingress side of the fiber optic transmission span, and the second designated amplifier is located on the egress side of the fiber optic transmission span; and
obtaining the power difference between the first power of the first amplifier in the target transmission span and the second power of the second amplifier in the target transmission span comprises:
obtaining an output power difference between output power of the first target amplifier and output power of the first designated amplifier;
obtaining an input power difference between input power of the second target amplifier and input power of the second designated amplifier; and
determining the power difference between the first power and the second power based on a sum of the output power difference and the input power difference.

5. The power regulation method according to claim 1, wherein the target transmission span comprises N fiber optic transmission spans, and N is a positive integer greater than or equal to 2;
the first amplifier comprises a first target amplifier,..., an i-th target amplifier,..., and an (N+1)-th target amplifier, where i is a positive integer greater than 1 and less than N+1; the first target amplifier is located on an ingress side of a first fiber optic transmission span, the i-th target amplifier is located on an egress side of an (i-1)-th fiber optic transmission span, and the (N+1)-th target amplifier is located on an egress side of an N-th fiber optic transmission span; the second amplifier comprises a first designated amplifier,..., an i-th designated amplifier,..., and an (N+1)-th designated amplifier; the first designated amplifier is located on the ingress side of the first fiber optic transmission span, the i-th designated amplifier is located on the egress side of the (i-1)-th fiber optic transmission span, and the (N+1)-th designated amplifier is located on the egress side of the N-th fiber optic transmission span; and
obtaining the power difference between the first power of the first amplifier in the target transmission span and the second power of the second amplifier in the target transmission span comprises:
performing, for an L-th fiber optic transmission span among the N fiber optic transmission spans, the following processes: obtaining an output power difference between output power of an L-th target amplifier and output power of an L-th designated amplifier; obtaining an input power difference between input power of an (L+1)-th target amplifier and input power of an (L+1)-th designated amplifier; and determining an L-th power difference for the L-th fiber optic transmission span based on a sum of the output power difference and the input power difference; wherein L is a positive integer less than or equal to N;
obtaining N power differences for the N fiber optic transmission spans respectively; and
determining an average value of the N power differences, and using the average value as the power difference between the first power and the second power.

6. The power regulation method according to claim 5, wherein determining the L-th power difference for the L-th fiber optic transmission span based on the sum of the output power difference and the input power difference comprises:
usingthe sum of the output power difference and the input power difference as the L-th power difference for the L-th fiber optic transmission span.

7. The power regulation method according to claim 5, wherein determining the L-th power difference for the L-th fiber optic transmission span based on the sum of the output power difference and the input power difference comprises:
determining, in a case where a number of the first band signals in the L-th fiber optic transmission span is different from a number of the second band signals in the L-th fiber optic transmission span, a target difference based on the number of the first band signals in the L-th fiber optic transmission span and the number of the second band signals in the L-th fiber optic transmission span; and
using a sum of the output power difference, the input power difference and the target difference as the L-th power difference for the L-th fiber optic transmission span.

8. The power regulation method according to claim 5, wherein increasing the first power of the first amplifier to the first correction power according to the first compensation amount, and decreasing the second power of the second amplifier to the second correction power according to the second compensation amount comprise:
increasing power of each target amplifier in the first amplifier to the first correction power according to the first compensation amount, and
decreasing power of each designated amplifier in the second amplifier to the second correction power according to the second compensation amount.

9. The power regulation method according to claim 1, wherein prior to obtaining the power difference between the first power of the first amplifier in the target transmission span and the second power of the second amplifier in the target transmission span, the method further comprises:
determining first expected power of the first amplifier;
determining second expected power of the second amplifier; and
regulating power of the first amplifier to the first expected power, and regulating power of the second amplifier to the second expected power.

10. An optical communication system, comprising:
an obtaining module, configured to obtain a power difference between first power of a first amplifier in a target transmission span and second power of a second amplifier in the target transmission span, wherein the first amplifier is configured to transmit a first band signal, the second amplifier is configured to transmit a second band signal, and the first power is smaller than the second power;
a determining module, configured to determine, in a case where the power difference is greater than or equal to a threshold value, a first compensation amount of the first power and a second compensation amount of the second power on the basis of the power difference, a sum of the first compensation amount and the second compensation amount being smaller than the power difference; and
a regulating module, configured to increase the first power of the first amplifier to first correction power according to the first compensation amount, and decrease the second power of the second amplifier to second correction power according to the second compensation amount, so that a power difference between the first correction power and the second correction power is smaller than the threshold value.

11. A computer storage medium, having a computer program stored thereon, wherein the computer program is used to execute the power regulation method according to any one of claims 1-9.
